# EUROPÄISCHE PATENTSCHRIFT

(11) **EP 0 688 005 B1**
(45) Veröffentlichungstag und Bekanntmachung des Hinweises auf die Patenterteilung: **01.03.2000**
(21) Anmeldenummer: 95109244.4
(22) Anmeldetag: 14.06.1995
(51) Int. Cl.: G09B 5/04, G11B 3/40

(54) **Phonogerät für Lernzwecke**
Record player for learning purposes
Electrophone pour applications d'apprentissage

(30) Priorität: 14.06.1994 DE 4420645
(43) Veröffentlichungstag der Anmeldung: 20.12.1995
(73) Patentinhaber: Döring, Erich, Dr.h.c., CH-9442 Berneck (CH)
(72) Erfinder: Döring, Erich, Dr.h.c., CH-9442 Berneck (CH)
(74) Vertreter: Behrens, Dieter, Dr.-Ing.

(56) Entgegenhaltungen:
- EP-A- 0 189 502
- EP-A- 0 294 202
- WO-A-91/00582
- DE-A- 2 836 303
- GB-A- 2 254 725
- US-A- 4 591 929

## Beschreibung

Die Erfindung betrifft eine Phonogerät für Lernzwecke, das zur Wiedergabe von spiralförmigen Tonrillen von Tonträgern geeignet ist, die auf verschiedenen Seiten eines tonillustrierten Druckmediums wie Buch, Broschüre, Heft oder Zeitschrift fest integriert vorhanden sind. Das Phonogerät hat eine Tonabnahmeeinrichtung mit einem um die Achse der spiralförmigen Tonrille in Drehung versetzbaren Abnahmekopf zur Abtastung der spiralförmigen Tonrille des Tonträgers. Das Phonogerät ist auf den Tonträger registergerecht zur spiralförmigen Tonrille zu deren Abspielen aufsetzbar, wozu ein meist batteriebetriebener Antriebsmotor für den Abnahmekopf von Hand eingeschaltet wird. Das Gerät hat ferner eine Tonwiedergabeeinrichtung für die vom Abnahmekopf abgetasteten Tonsignale, die wenigstens einen Verstärker für die Tonsignale des Abnahmekopfs und einen Lautsprecher zur Wiedergabe der in der Tonrille gespeicherten Information hat. Solche Tonwiedergabegeräte sind in ihrem grundsätzlichen Aufbau bekannt, z. B. aus den U.S. Patentschriften 3,224,782 und 4,740,945.

Beim Unterricht oder Selbstunterricht sollen oftmals bildliche oder schriftliche Informationen in den Unterrichtsmaterialien durch Toninformationen ergänzt werden. Insbesondere bei Sprachstudien ist es wünschenswert, dem Lernenden fremdsprachliche Wörter oder Texte vorzusprechen, um sie zu vertiefen und die richtige Aussprache zu demonstrieren. Dabei ist es insbesondere vorteilhaft, wenn die gesprochenen Texte in relativ kurzen Abschnitten auf eine Vielzahl von Tonträgern aufgezeichnet sind, die jeweils fest an den entsprechenden Stellen in das Lehrmaterial integriert sind.

Ein zur Wiedergabe solcher Tonträger geeignetes Gerät, das die eingangs genannten Merkmale aufweist, ist u.a. aus der EP-A-0 189 502 bekannt. Beim Einsatz eines solchen Gerätes ergibt sich aber das Problem, daß der Schüler, wenn er die Texte nachspricht, sich auf das Nachsprechen konzentrieren muß und es daher für ihn schwierig ist, die genauen Unterschiede zu der auf den Tonträgern gespeicherten Aussprache festzustellen.

Diesen Mangel versucht ein Gerät zu vermeiden, das in der deutschen Offenlegungsschrift 33 46 438 beschrieben ist. Als Tonträger ist eine kleine, durch das Gerät transportierbare Karte mit einer bespielten und einer unbespielten Aufzeichnungsspur vorgesehen, wobei auf letztere vom Benutzer aufgesprochener Text speicherbar ist. Je Karte ist eine Aufzeichnungsspur erforderlich. Ein solches System eignet sich nicht für die Abtastung von Tonrillen oder Tonspuren, die auf eine Buchseite aufgebracht sind. Der Zugriff auf bestimmte Stellen der Aufzeichnung ist erschwert.

Zur Unterstützung des Lernens von Fremdsprachen und von Aussprache soll ein bekanntes Sprachlern-Kassettengerät dienen, das aus der britischen Offenlegungsschrift 2 254 725 A bekannt ist. Es hat einen digitalen Speicher in einer Zusatzinrichtung zur Tonaufnahme, Tonspeicherung und zur Wiedergabe über die Tonwiedergabeeinrichtung des Kassettengeräts. Ein solcher Kassetenrekorder, auch wenn er mit einer Zusatzeinrichtung mit einem digitalen Speicher (Sprachchip) ausgerüstet ist, kann den Bedürfnissen des Sprachunterrichts insgesamt nicht gerecht werden, weil der fremdsprachliche Text auf der Kassette gespeichert ist, die eine Laufdauer von 30 bis 60 Minuten und darüber hat. Das Auffinden von bestimmten Stellen, insbesondere Satzteilen oder gar Wörtern auf einer Kassette ist bekanntermaßen schwierig. Einem Lerntext sind meist nur eine oder zwei längere Kassetten zugeordnet.

Die moderne Didaktik - wie sie von den bekannten Linguistik-Instituten heute gelehrt wird - betont einerseits die Notwendigkeit des Lernens in der sozialen Gruppe und andererseits die Wichtigkeit der individuell gestaltbaren, kleinen Lernschritte und der individuell bestimmbaren Wiederholungshäufigkeit für das Lernen zuhause. Diese letztgenannte Forderung der Didaktiker ist mit den bekannten Lerngeräten, insbesondere mit Kassettenrekordern, nicht erfüllbar, weil sich Wiederholung immer nur auf kurze Einheiten beziehen kann. Solche Einheiten in Kassetten präzise zu finden, ist einerseits praktisch unmöglich und andererseits verleitet das zeitlich große Angebot auf der Tonband-Kassette den Lernenden, auch andere Inhalte anzuhören und damit die Konzentration auf die wesentliche Vorgabe zu verlieren.

Werden Lerninhalte nach Methoden des programmierten Lernens aufbereitet, ist bei Auftreten einer Wissenslücke oder einer fehlerhaft eingelernten Sequenz ein Rückgriff auf die Grundlagen bzw. die Vorstufen notwendig. Diese Vorstufen sind meist kurz eingegrenzte Inhalte, die auf Tonband-Kassetten kaum zu finden sind bzw. zu deren Auffinden auch noch Tonband-Kassetten gewechselt werden müssen, um den verlangten Lernschritt zu suchen. Dies ist umständlich, erfordert sehr viel Zeitaufwand, verursacht den Verlust der Lernstelle auf der derzeit gearbeitet wird, und wird daher vom Lernenden abgelehnt und nicht ausgeführt.

Die moderne Didaktik verlangt das Lernen zu Hause sowohl für den Schulpflichtigen als auch insbesondere für den Erwachsenen. Die Schule bzw. die Bildungseinrichtung wird, um die heute sehr hohe Abbrecher-Quote zu reduzieren, dem Lernenden nur einen sehr kleinen Lerninhalt mit als Aufgabe nach Hause geben, um Überforderung und damit Versagen, Unlust und in der Folge Abbrechen des Lernens zu vermeiden. Je kürzer der Lerninhalt ist, welcher mind. 5 - 7 Mal wiederholt werden muss, um gelernt (nicht nur kurzfristig verstanden) zu sein, um so kleiner wird die Abbrecher-Quote und um so größer der Lernerfolg sein. Pädagogen stellen auf der einen Seite zunehmende Hyperaktivität und auf der anderen Seite mangelnde Konzentrationsstärke fest. "Bei der Sache zu bleiben" ist vielen Lernenden nur mehr kurzzeitig möglich; Lernmittel müssen daher diese Tatsache berücksichtigen und nicht nur die Möglichkeit für kurze Lernschritte vorsehen (schließlich könnte man durch Stop und Ausschalten alles Langdauernde unterbrechen), sondern die Lerninhalte müssen in kurzen Abschnitten fix vorgegeben sein (zum Verständnis: man klagt über langdauerndes Fernsehen und könnte mit dem Ausschaltknopf doch jederzeit unterbrechen, man tut es aber nicht - daher die Forderung beim Lernen nach kurzen Lernschritten, die vorgegeben sind).

Es ist demgemäß Aufgabe der Erfindung, eine Vorrichtung für Lernzwecke bereitzustellen, die ein an die Bedürfnisse zeitgemäßer Didaktik angepaßtes, individuelles Lernen in kleinen Lerneinheiten außerhalb der Gruppe gezielt ermöglicht und es dabei dem Schüler erlaubt, Fremdsprachentexte zu hören, sie nachzusprechen und die eigene Aussprache mit der des Originals bequem zu vergleichen.

Erfindungsgemäß wird diese Aufgabe dadurch gelöst, daß ein Phonogerät der eingangs genannten Art eine eingebaute Zusatzeinrichtung aufweist, die ein Mikrofon zur Aufnahme des vom Lernenden gesprochenen Textes integriert oder an diese anschließbar hat und eine digitalen Festkörperspeichereinrichtung zur Tonspeicherung von vom Lernenden in das Mikrophon gesprochenem Text und von von der Tonrille wiedergegebenem Text umfaßt, daß das Phonogerät zur gleichzeitigen Tonspeicherung mit der Zusatzeinrichtung und Tonwiedergabe mit der Tonwiedergabeeinrichtung eingerichtet ist, und daß die Tonwiedergabeeinrichtung zur wahlweisen Wiedergabe der aus dem Tonträger und/oder der aus dem Festkörperspeicher ausgelesenen Tonsignale eingerichtet ist.

Das Zusammenwirken der Komponenten eines erfindungsgemäßen Phonogeräts hat den Hauptvorteil, daß der Lernende die auf den in Bücher integrierten Tontrillen aufgenommenen Texte hören und dabei beliebig nachsprechen kann.

Das erfindungsgemäße Phonogerät ist in der Handhabung praktisch, da der Schüler nur zwei Teile, nämlich Lehrbuch (mit fest damit verbundenen Tonträgern) und Phonogerät (mit eingebauter Aufzeichnungseinrichtung) benötigt. Das Phonogerät ist ebenso wie das bekannte kompakt, transportabel und günstig herzustellen und bequem an beliebiger Stelle im Buch verwendbar.

Weiter weist ein erfindungsgemäßes Phonogerät auch die Vorteile der aus Tonabnahmeeinrichtung und Tonwiedergabeeinrichtung bestehenden Tonträger-Abspielvorrichtung auf. So können die einzelnen Tonträger an geeigneten Stellen des Lehrmaterials fest in das Druckwerk integriert werden, so daß sich der Tonträger auf der gleichen Seite wie der entsprechende gedruckte Text oder das Bild befindet. Das ist didaktisch günstig und erleichtert es, eine bestimmte Lektion zu finden. Die relativ kurze Aufzeichnungsdauer jedes einzelnen Tonträgers (3 Minuten oder weniger) erhöht die Motivation des Lernenden, da der Lernstoff in kleine Einheiten unterteilt ist, und regt zum häufigen Wiederholen an. Die Tonträger sind robust gegen Beschädigungen und Verschmutzung, billig herzustellen und nicht (versehentlich oder absichtlich) lösch- oder überspielbar.

Die digitale Festkörperspeichereinrichtung des erfindungsgemäßen Phonogeräts hat Vorteile, was die Flexibilität der Sprachaufnahme und -wiedergabe angeht. Beliebige Sprünge im Speicher sind bei Aufnahme und Wiedergabe ohne Zeitverzögerung möglich. Wenige Tasten reichen zur Bedienung des Speichers aus, wie in der nachfolgenden Beschreibung eines Ausführungsbeispiels dargestellt ist. Neben einer Steuerung durch Tasten kann die Aufnahme sprachgesteuert erfolgen. Für die Wiedergabe sind komfortable Such- und Wiederholungsfunktionen verwirklichbar.

Vorzugsweise ist die Zusatzeinrichtung zur Tonaufnahme, -speicherung und -wiedergabe im wesentlichen aus einem integrierten Bauelement ("Voice-IC") oder aus einigen wenigen integrierten Bauelementen aufgebaut. Die digitale Speichereinrichtung ist vorzugsweise Teil eines solchen Bauelements. Die Zusatzeinrichtung kann, zum Beispiel durch geeignete Filterung, für die Aufzeichnung speziell von Sprache optimiert sein.

Ein erfindungsgemäßes Phonogerät kann ohne Mikrofon verwendet werden, wenn nicht die Aussprache des Lernenden aufgenommen werden soll, sondern wenn nur einzelne Teile einer Tonträger-Aufzeichnung gespeichert und beim Abspielen im digitalen Speicher anschließend wiederholt abgespielt werden sollen, ohne daß dazu die Tonrille erneut abgetastet werden muß, was den Abnahmekopf und die Antriebsmechanik schont. Das kann sinnvoll sein, um das Sprachverständnis des Schülers durch oftmaliges Wiederholen zu fördern.

Zur Lösung der Zusatzaufgabe und vorzugsweise ist allerdings an das Phonogerät, genauer gesagt an die Zusatzeinrichtung, ein Mikrofon zur Aufnahme des gesprochenen Textes des Lernenden angeschlossen, so daß die Aussprache des Lernenden aufgenommen und gespeichert und anschließend wiedergegeben werden kann. Dieses Mikrofon kann sowohl im Phonogerät selber als auch, über eine Steckverbindung angeschlossen, extern angeordnet sein. Als externe Mikrofone sind Tisch-, Ansteck- oder Knopflochmikrofone oder Kopfhörer-Sets mit angebautem Mikrofon denkbar. Der Schüler kann diese Aufnahme anschließend abspielen und somit seine eigene Aussprache und die der Tonträger-Aufnahme ohne Störung durch das eigene Sprechen vergleichen.

Möchte der Lernende den Text mitsprechen und aufnehmen, während er ihn hört, ist es vorteilhaft, wenn das Phonogerät zur gleichzeitigen Tonaufnahme über die Zusatzeinrichtung und Tonwiedergabe über die Tonwiedergabeeinrichtung eingerichtet ist. In Verbindung mit dem Mikrofon können dann mit dem Phonogerät gleichzeitig der gesprochene Text des Lernenden aufgenommen und die auf dem Tonträger gespeicherten Tonsignale wiedergegeben werden.

Das Phonogerät ist vorzugsweise so ausgestattet, daß über die Tonwiedergabeeinrichtung entweder die in der Tonrille gespeicherten Tonsignale oder die im digitalen Speicher gespeicherten Tonsignale wiedergegeben werden können. Zusätzlich kann eine Möglichkeit vorgesehen sein, eine Mischung dieser Tonsignale wiederzugeben. Beim Einsatz als Lehrhilfsmittel dienen die ersten beiden Einstellungen dazu, den vorgesprochenen Originaltext beziehungsweise den vom Lernenden gesprochenen Text zu hören, während die Misch-Einstellung zum genauen Vergleich beider Aussprachen vorteilhaft ist. Das Mischverhältnis kann fest vorgegeben oder stufenlos einstellbar sein.

Die Tonabnahmeeinrichtung des Phonogeräts umfaßt vorzugsweise einen drehbaren Tonteller mit einem Ausschnitt und einem auf der einen Seite des Tontellers angebrachten Tonarm mit dem Abnahmekopf. Beim Betrieb des Gerätes tastet der Abnahmekopf durch den Ausschnitt hindurch die der anderen Seite des Tontellers zugewandte Spiralrille des Tonträgers ab. Eine derartig aufgebaute bekannte Tonabnahmeeinrichtung ist besonders günstig und robust (EP-A-0 189 502).

Um auch innerhalb der Aufzeichnung eines Tonträgers auf bestimmte Abschnitte wahlfrei zugreifen zu können, ist es günstig, wenn die Abtastlage oder der Abtastbeginn des Tonarms manuell einstellbar ist, so daß die Abtastung an einer gewünschten Stelle des Tonträgers beginnt. Eine solche Möglichkeit ist besonders einfach zu verwirklichen, wenn die manuelle Einstellung des Tonarms durch Verschieben des im Ausschnitt zugänglichen Abnahmekopfes erfolgt.

Zur einfacheren Wahl eines abzuspielenden Abschnitts des Tonträgers ist es vorteilhaft, wenn an der der Tonrille zugewandten Seite des Tontellers nahe am Ausschnitt eine Skala angebracht ist.

Vorzugsweise ist das erfindungsgemäße Phonogerät dazu geeignet, in einem Sprachlabor mit mehreren Schülerplätzen und mindestens einem Lehrerplatz als Schülergerät eingesetzt zu werden. Es ist dann mit einer Verbindungseinrichtung zum Anschluß an den Lehrerplatz ausgestattet. Im einfachsten Fall ist die Verbindungseinrichtung so geschaltet, daß der Lehrer den gesprochenen Text des Lernenden abhören und den Lernenden ansprechen kann. Das kann zum Beispiel dadurch geschehen, daß der Lehrer eine Kopfhörer/Mikrofon-Kombination durch den einzelnen Schülergeräten zugeordnete Schalter direkt mit dem Mikrofon und der Tonwiedergabeeinrichtung eines Schülergerätes verbinden kann.

Das Phonogerät ist vorzugsweise möglichst kompakt, wodurch es leicht transportabel ist und zum Beispiel wahlweise im Sprachlabor und zu Hause eingesetzt werden kann. Vorzugsweise hat das Phonogerät Abmessungen von höchstens 15 x 12 x 6 cm.

Ein erfindungsgemäßes Phonogerät ist nicht nur beim Erlernen von Fremdsprachen nützlich, sondern auch für das Sprechenlernen von Sprech- und/oder Hörgeschädigten und in allen Anwendungsbereichen, bei denen eine exakte Wiederholung und Prüfung der genauen Wiedergabe des Gehörten notwendig ist, zum Beispiel bei der Ausbildung von Lotsen oder Piloten.

Ein Ausführungsbeispiel der Erfindung wird nun unter Hinweis auf die Zeichnung näher beschrieben. Es zeigen:
Fig. 1 ein Blockschaltbild des elektrischen Aufbaus eines erfindungsgemäßen Phonogerätes,
Fig. 2 eine Draufsicht auf das erfindungsgemäße Phonogerät,
Fig. 3 eine perspektivische Ansicht eines Tonträgers zur Verwendung mit dem erfindungsgemäßen Phonogerät,
Fig. 4 eine perspektivische Ansicht der Oberseite eines Tontellers des erfindungsgemäßen Phonogerätes, und
Fig. 5 eine perspektivische Ansicht der Unterseite des Tontellers des erfindungsgemäßen Phonogerätes mit einer Detaildarstellung eines Schwenkhebels.

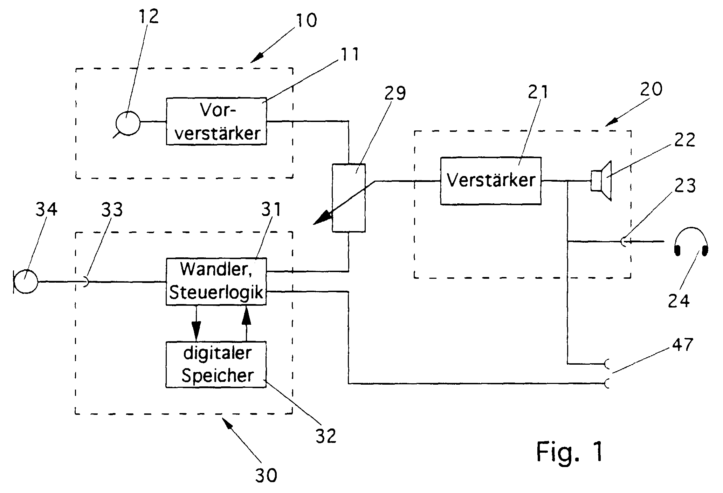

Im Blockschaltbild von Fig. 1 sind einige zum Verständnis des Ausführungsbeispiels wichtige elektrische Komponenten des erfindungsgemäßen Phonogerätes gezeigt. Die Komponenten sind in die Blöcke einer Tonabnahmeeinrichtung 10, einer Tonwiedergabeeinrichtung 20 und einer Zusatzeinrichtung 30 gegliedert. Weiter sind in Fig. 1 eine Mischeinrichtung 29, ein Mikrofon 34, ein Kopfhörer 24 und eine Verbindungseinrichtung 47 zum Anschluß an ein Lehrerpult gezeigt. Nicht in Fig. 1 gezeigt, aber auch zum Phonogerät gehörig, sind Komponenten wie ein Antriebsmotor mit Motorsteuerung, diverse Schalter, Taster, Buchsen und Regler, eine Steuereinheit, eine Stromversorgung und mechanische Komponenten.

Die Tonabnahmeeinrichtung 10 umfaßt einen Abnahmekopf 12 und einen Vorverstärker 11, der mit einem ersten Eingang der Mischeinrichtung 29 verbunden ist, wobei die Mischeinrichtung 29 entweder ein Potentiometer oder eine geeignet angesteuerte elektronische Baugruppe sein kann.

Die Tonwiedergabeeinrichtung 20 umfaßt einen Verstärker 21, dessen Eingang mit dem Ausgang der Mischeinrichtung 29 und dessen Ausgang mit einem Lautsprecher 22, einem Kopfhöreranschluß 23 und einem ersten Anschluß der Verbindungseinrichtung 47 zum Lehrerpult verbunden ist. Der Kopfhöreranschluß 23 kann auch so geschaltet sein, daß der Lautsprecher 22 abgeschaltet wird, sobald der Kopfhörer 24 eingesteckt wird.

Die Zusatzeinrichtung 30 umfaßt eine Baugruppe mit Analog/Digital- und Digital/Analog-Wandlern und Steuerlogik 31, die mit einer digitalen Festkörperspeichereinrichtung 32 (Voice-IC), einem Mikrofonanschluß 33, einem zweiten Eingang der Mischeinrichtung 29 und einem zweiten Anschluß der Verbindungseinrichtung 47 verbunden ist. Das Mikrofon 34 ist mit dem Mikrofonanschluß 33 verbunden.

Die Mischeinrichtung 29 kann an einem Einstellregler-Knopf 45 so eingestellt werden, daß der Verstärker 21 wahlweise ein Signal vom Vorverstärker 11, vom Wandler 31 oder eine Mischung dieser Signale erhält.

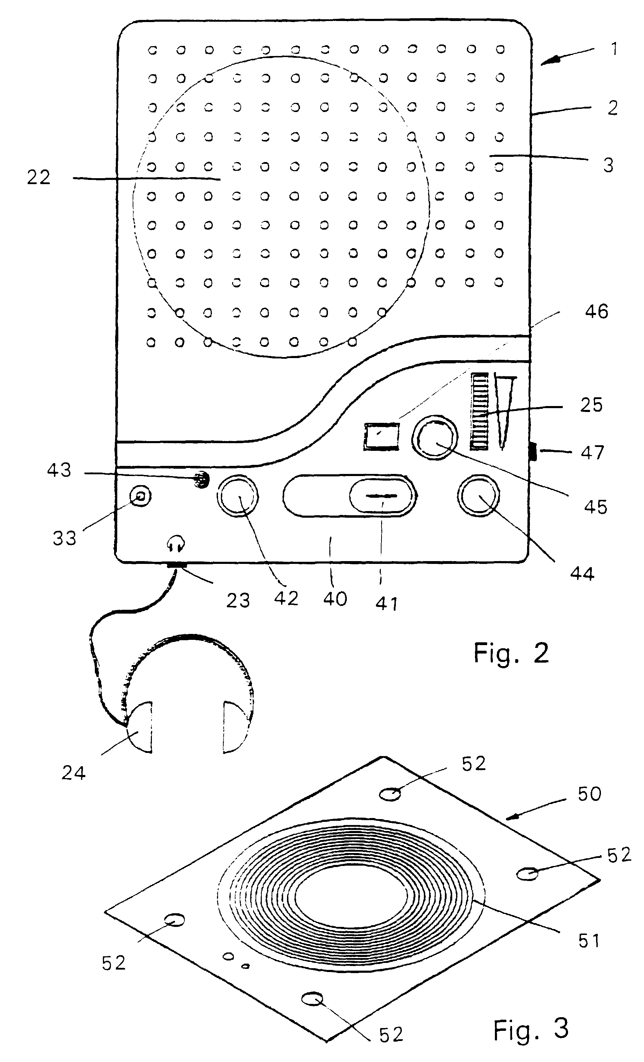

In Fig. 2 ist ein Beispiel die äußeren Gestaltung des erfindungsgemäßen Phonogerätes 1 gezeigt. Ein Gehäuse 2 hat einen mit Schallaustrittslöchern versehenen ersten Bereich 3, hinter dem der Lautsprecher 22 angebracht ist, und einen mit Bedienungselementen versehenen zweiten Bereich 40. Die Bedienungselemente umfassen einen Schiebeschalter 41, eine Rücklauftaste 42, eine Pausen- und Aufnahmetaste 44, eine Anzeige 43, den Einstellregler-Knopf 45 für die Mischeinrichtung 29, ein Bedienelement 46, einen mit dem Verstärker 21 verbundenen Lautstärkeregler 25, den als Buchse ausgestalteten Mikrofonanschluß 33, den als Buchse ausgestalteten Kopfhöreranschluß 23 und die als mehrpolige Buchse ausgestaltete Verbindungseinrichtung 47. Der Schiebeschalter 41 hat drei Positionen. Das gesamte Gerät 1 ist ausgeschaltet, wenn er ganz nach links geschoben ist ("STOP"). Ist der Schiebeschalter 41, wie in Fig. 2 gezeigt, ganz nach rechts geschoben ("START"), so wird ein Tonarm 13 auf einen Tonträger 50 aufgesetzt und ein Motor zum Antrieb eines Tontellers 60 eingeschaltet, so daß die auf dem Tonträger 50 in einer spiralförmigen Tonrille 51 gespeicherten Toninformationen abgespielt werden. Durch Betätigen der Pausen- und Aufnahmetaste 44 wird der Schiebeschalter 41 etwa 3 mm nach links geschoben ("PAUSE") und dadurch die Stromzufuhr zum Antriebsmotor des Tontellers 60 unterbrochen, der Tonarm 13 jedoch nicht angehoben. Der Schiebeschalter 41 kann dann manuell wieder ganz nach rechts geschoben werden, um den Pausenzustand zu beenden und das Abspielen fortzusetzen. Die Position des Tonarms 13 verändert sich während des Pausenzustands nicht, so daß das Abspielen genau an der unterbrochenen Stelle fortgesetzt wird.

Fig. 3 zeigt den Tonträger 50 zur Verwendung mit dem Gerät 1, der die Spiralrille 51 und Führungslöcher 52 für das registergerechte Aufsezten aufweist. Das Gerät 1 kann mit seiner Unterseite zum Abspielen registergerecht zur Tonrille 51 auf den Tonträger 50 aufgesetzt werden.

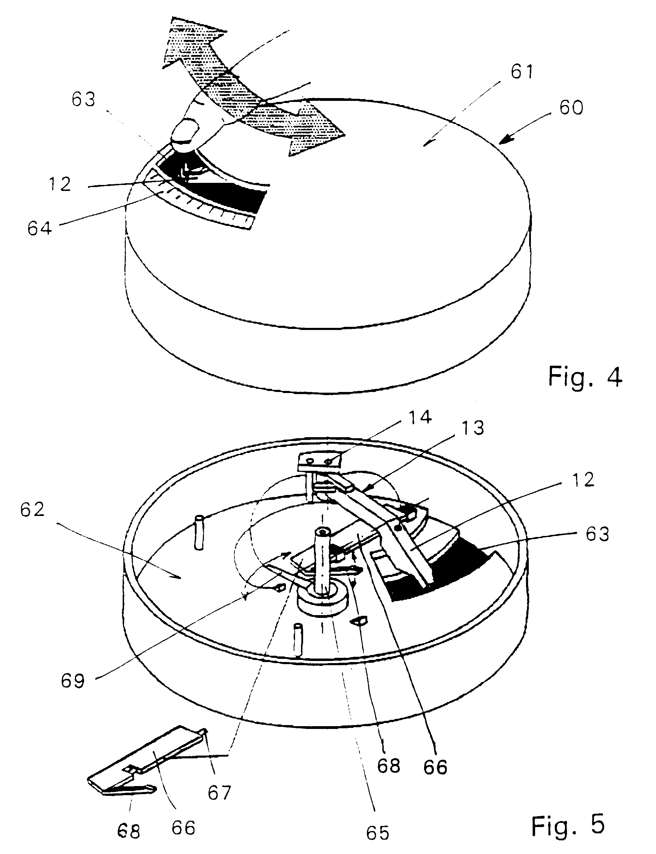

Fig. 4 zeigt eine dem Tonträger zugewandte Außenseite 61 eines drehbaren Tontellers 60, der an der Unterseite des Geräts 1, ein wenig in dieses eingelassen, angeordnet ist. Die Außenseite 61 ist beim Betrieb des Geräts also dem Tonträger 50 zugewandt. Der Abnahmekopf 12 des Tonarms 13 ist durch einen bogenförmigen Ausschnitt 63 im Tonteller 60 zugänglich. Der Abnahmekopf 12 (und damit der Tonarm 13) kann manuell in Pfeilrichtung bewegt werden. Eine neben dem Ausschnitt 63 angebrachte bogenförmige Skala 64 erlaubt es, die Position des Abnahmekopfes 12 bequem abzulesen.

Die dem Tonträger abgewandte Seite 62 bzw. die Innenseite des Tontellers 60 ist in Fig. 5 dargestellt. Der Tonarm 13 ist um eine Achse 14 schwenkbar gelagert. Durch eine Feder (nicht gezeigt) wird der Tonarm 13 mit etwa 35 mN in Fig. 5 nach unten belastet. Ein Schwenkhebel 66 ist mit einem Zapfen 67 am Drehteller 60 gelagert und weist einen angewinkelten Ansatz 68 auf. Eine Lötzunge 69 dient zum Anbringen einer Kabelverbindung vom Tonarmlager bei der Achse 14 zu einer Mittelachse 65 des Drehtellers 60.

Durch Schieben des Schiebeschalters 41 von "STOP" auf "START" wird der Schwenkhebel 66 freigegeben und durch den Auflagedruck des Abnahmekopfes 12 in Fig. 5 nach unten gedrängt. Der Tonarm 13 mit dem Abnahmekopf 12 kommt dann nach unten in Kontakt mit der Spiralrille 51 des Tonträgers 50. Der Tonarm 13 bleibt auch in dieser Position, wenn der Schiebeschalter auf "PAUSE" geschoben wird. Wird der Schiebeschalter 41 wieder auf "STOP" geschoben, so wird der Schwenkhebel 66 in Fig. 5 nach oben gedrängt, wodurch der Tonarm 13 ebenfalls nach oben gedrängt und der Abnahmekopf 12 von der Tonrille 51 des Tonträgers 50 abgehoben wird. Der Abnahmekopf 12 wird nur so weit abgehoben, daß er ungefähr bündig mit der Außenseite 61 des Tontellers 60 ist, damit er weiterhin zur manuellen Verstellung zugänglich bleibt.

Beim Betrieb wird das Phonogerät 1 lagegerecht auf einen den Originaltext enthaltenden Tonträger 50 gesetzt und wird der Tonarm 13 mit dem Schiebeschalter 41 auf den Tonträger 50 abgesenkt (Stellung "START"). Dadurch wird das Phonogerät 1 eingeschaltet und der Originaltext über den Lautsprecher 22 und/oder den Kopfhörer 24 wiedergegeben. Die Pausen- und Aufnahmetaste 44 hat nur die Funktion einer Pausentaste, wenn sie kürzer als 0,5 s betätigt wird. Durch das Betätigen dieser Taste wird der Schiebeschalter 41 in die Position "PAUSE" gedrängt und damit, wie oben beschrieben, die Stromzufuhr für den Antrieb des Tontellers 60 unterbrochen. Um die Wiedergabe fortzusetzen, schiebt man den Schiebeschalter 41 wieder ganz nach rechts in die Position "START".

Um einen Satz nachzusprechen, wird die Pausen- und Aufnahmetaste 44 länger als 0,5 s betätigt. Dadurch wird sowohl der Schiebeschalter 41 in die Position "PAUSE" gedrängt (und damit die Tonträger-Wiedergabe unterbrochen) als auch die Aufnahme in der digitalen Festkörperspeichereinrichtung 32 über das Mikrofon 34 gestartet. Alter Text wird im Speicher 32 automatisch gelöscht. Durch Betätigung der Rücklauftaste 42 wird die Aufnahme beendet und der aufgenommene Text von Anfang an wiedergegeben. Jede weitere Betätigung der Rücklauftaste 42 startet die Wiedergabe des aufgenommenen Textes erneut von Anfang an. Die Wiedergabe wird ohne Tastenbetätigung beendet, wenn die Position im Speicher 32 erreicht ist, bei der die Aufnahme beendet wurde. Um die Wiedergabe des Originaltextes fortzusetzen, wird der Schiebeschalter 41 ganz nach rechts in die Position "START" geschoben.

Besonders sinnvoll ist es, wenn Sätze, Satzteile oder Worte auf dem Tonträger 50 ein- oder mehrmals wiederholt werden. Zum Beispiel kann jeder Satz auf den Tonträger zweimal hintereinander aufgesprochen sein. Der Schüler hört den Satz, betätigt die Pausen- und Aufnahmetaste 44, spricht den Satz nach, stellt den Schiebeschalter 41 ganz nach rechts in die Position "START" und betätigt gleichzeitig Rücklauftaste 42 und hört sich somit seine Aussprache zusammen mit der Wiederholung des Satzes auf dem Tonträger 50 an. Durch den Einstellregler-Knopf 45 für die Mischeinrichtung 29 kann der Schüler das Lautstärkenverhältnis zwischen Originaltext und aufgezeichnetem Text ändern. Ist ein 2-Kanal-Kopfhörer 24 angeschlossen, so kann der Originaltext über einen und der aufgenommene Text über den anderen Kanal wiedergegeben werden.

Wenn jeder Satz auf dem Tonträger 50 dreimal hintereinander aufgezeichnet ist, kann der Schüler auch gleichzeitig mit dem Abspielen der zweiten Tonträger-Aufzeichnung sprechen und seine Aufzeichnung mit der dritten Tonträger-Aufzeichnung vergleichen. Dazu muß der Schiebeschalter 41, nachdem er durch das Betätigen der Pausen- und Aufnahmetaste 44 in die Position "PAUSE" gedrängt wurde, wieder ganz nach rechts auf "START" gestellt werden.

Zur Bedienungserleichterung werden die Schaltzustände des Geräts 1 durch eine Anzeige 43 signalisiert. Der Lautstärkeregler 25 dient zum Einstellen der Wiedergabelautstärke.

Beim Ausschalten des Geräts 1 durch den Schiebeschalter 41 wird während der letzten Umdrehung des Tontellers 60 durch das Zusammenwirken von Schwenkhebel 66 und Tonarm 13 der Abnahmekopf 12 von der Oberfläche des Tonträgers 50 abgehoben. Das Gerät 1 kann dann vom Tonträger 50 abgenommen werden.

Um eine bestimmte Textstelle auf einem Tonträger 50 abzuhören, verstellt der Schüler den durch den Ausschnitt 63 zugänglichen Abnahmekopf 12 manuell auf eine bestimmte Position der Skala 64. Durch die Reibung zwischen dem Schwenkhebel 66 und dem gegen diesen mit etwa 35 mN drückenden Tonarm 13 verstellt sich der Tonarm 13 nicht, wenn das Gerät 1 wieder umgedreht und auf den Tonträger 50 gesetzt wird.

Das Gerät 1 kann auch als Schülergerät in einem Sprachlabor eingesetzt werden. Dazu wird das Gerät 1 über die Verbindungseinrichtung 47 und eine Leitung mit dem Lehrerpult verbunden. Der Originalton wird weiterhin vom Tonträger 50 abgetastet und die eigene Aufnahme im Gerät 1 gespeichert. Der Lehrer kann sich jederzeit den gerade vom Schüler gesprochenen Text oder den im Speicher 32 aufgenommenen Text anhören. Ist eine Korrektur des Schülers notwendig, kann der Lehrer jeden Schüler über dessen Kopfhörer 24 ansprechen.

## Patentansprüche

1. Phonogerät für Lernzwecke mit einer Tonabnahmeeinrichtung (10) mit einem in Drehung versetzbaren Abnahmekopf (12) zur Abtastung einer spiralförmigen Tonrille (51) eines in einem Druckwerk wie Buch, Broschüre, Heft oder Zeitschrift fest integrierten Tonträgers (50), auf den das Phonogerät registergerecht zur Tonrille (51) aufsetzbar ist, und einer Tonwiedergabeeinrichtung (20) für die vom Abnahmekopf abgetasteten Tonsignale
dadurch gekennzeichnet,
daß das Phonogerät eine eingebaute Zusatzeinrichtung (30) aufweist, die ein Mikrofon (34) zur Aufnahme des vom Lernenden gesprochenen Textes integriert oder an diese anschließbar hat und eine digitalen Festkörperspeichereinrichtung (32) zur Tonspeicherung von vom Lernenden in das Mikrophon gesprochenem Text und von von der Tonrille wiedergegebenem Text umfaßt, und daß das Phonogerät zur gleichzeitigen Tonspeicherung mit der Zusatzeinrichtung (30) und Tonwiedergabe mit der Tonwiedergabeeinrichtung (20) eingerichtet ist, und
daß die Tonwiedergabeeinrichtung (20) zur wahlweisen Wiedergabe der aus dem Tonträger (50) und/oder der aus dem Festkörperspeicher (32) ausgelesenen Tonsignale eingerichtet ist.

2. Phonogerät nach Anspruch 1,
dadurch gekennzeichnet,
daß die Tonabnahmeeinrichtung (10) einen drehbaren Tonteller (60) mit einem Ausschnitt (63) und einem an der einen Seite (62) des Tontellers (60) angebrachten Tonarm (13) mit dem Abnahmekopf (12) aufweist, der beim Betrieb des Phonogerätes durch den Ausschnitt (63) hindurch die der anderen Seite (61) des Tontellers (60) zugewandten spiralförmigen Tonrille (51) des Tonträgers (50) abtastet.

3. Phonogerät nach Anspruch 2,
dadurch gekennzeichnet,
daß die Abtastlage des Tonarms (13) manuell einstellbar ist, so daß die Abtastung an einer gewünschten Stelle des Tonträgers (50) beginnen kann.

4. Phonogerät nach Anspruch 3,
dadurch gekennzeichnet,
daß die manuelle Einstellung des Tonarms (13) durch Verschieben des im Ausschnitt (63) zugänglichen Abnahmekopfes (12) erfolgt.

5. Phonogerät nach einem der Ansprüche 2 bis 4,
dadurch gekennzeichnet,
daß an der der Tonrille zugewandten Seite (61) des Tontellers (60) nahe dem Ausschnitt (63) eine Skala (64) angebracht ist.

6. Phonogerät nach einem der vorhergehenden Ansprüche,
dadurch gekennzeichnet,
daß seine Abmessungen höchstens 15 x 12 x 6 cm betragen.

## Claims

1. A phonographic apparatus for learning purposes, comprising a sound pickup means (10) including a pickup head (12) adapted to be rotated for scanning a spiral-shaped sound groove (51) of a sound carrier (50) firmly integrated in a printed medium such as a book, brochure, copybook or magazine, on which the phonographic apparatus can be placed in alignment with the sound groove (51), and a sound reproducing means (20) for the sound signals scanned by the pickup head,
characterized in that
the phonographic apparatus has supplementary means (30) installed therein which includes integrally or is adapted to be connected to a microphone (34) for recording the text spoken by a student, and which comprises a static digital memory means (32) for sound-recording text spoken by the student into the microphone and of text reproduced from the sound groove, and that the phonographic apparatus is adapted for simultaneous sound recording by means of the supplementary means (30) and sound reproduction by means of the sound reproducing means (20), and
that the sound reproducing means (20) is designed for selective reproduction of the sound signals read out of the sound carrier (50) and/or the static digital memory means (32).

2. The phonographic apparatus according to claim 1,
characterized in that
the sound pickup means (10) comprises a rotatable turntable (60) having a cutout (63) and a pickup arm (13) with the pickup head (12) disposed at one side of the turntable (60), the pickup head (12) scanning the spiral-shaped sound groove (51) of the sound carrier (50) facing the other side (61) of the turnable (60) through the cutout (63) during operation of the phonographic apparatus.

3. The phonographic apparatus according to claim 2,
characterized in that
the scanning position of the pickup arm (13) is manually adjustable so that scanning can begin at a desired location of the sound carrier (50).

4. The phonographic apparatus according to claim 3,
characterized in that
the manual adjustment of the pickup arm (13) is effected by shifting the pickup head (12) that is accessible in the cutout (63).

5. The phonographic apparatus according to one of claims 2 to 4, characterized in that
a scale (64) is arranged at the side of the turntable (60) facing the sound groove, near the cutout (64).

6. The phonographic apparatus according to one of the preceding claims, characterized in that
its maximum dimensions are 15 x 12 x 6 cm.

## Revendications

1. Phonographe à but didactique comprenant un moyen de lecture de sons (10) comprenant une tête de lecture (12) pouvant être mise en rotation pour palper un sillon gravé (51) en forme de spirale d'un support de son (50) intégré de façon fixe dans un ouvrage d'imprimerie tel qu'un livre, une brochure, un cahier ou un magazine sur lequel le phonographe peut être monté de façon repérée par rapport au sillon gravé (51) et un moyen de restitution de son (20) pour les signaux de son lus par la tête de lecture
caractérisé en ce que
le phonographe présente un accessoire (30) intégré qui comprend un microphone (34) pour l'enregistrement du texte prononcé par l'élève ou peut être raccordé à celui-ci et comprend un moyen de mémoire fixe numérique (32) pour enregistrer les sons du texte prononcé dans le microphone par l'élève et du texte restitué à partir du sillon gravé, et en ce que le phonographe est équipé pour l'enregistrement simultané du son par l'accessoire (30) et la restitution du son par le moyen de restitution de son (20), et
en ce que le moyen de restitution de son (20) est équipé pour restituer au choix les signaux de son lus du support de son (50) et / ou du moyen de mémoire fixe numérique (32).

2. Phonographe selon la revendication 1,
caractérisé en ce que
le moyen de lecture de son (10) présente un plateau tournant (60) comprenant une fenêtre (63) et un bras de lecture (13) disposé de l'un (62) des côtés du plateau tournant (60), ledit bras de lecture possédant la tête de lecture (12) qui lit, pendant le fonctionnement du phonographe, à travers la fenêtre (63) le sillon gravé (51) en forme de spirale, faisant face à l'autre côté (61) du plateau tournant (60), du support de son (50).

3. Phonographe selon la revendication 2,
caractérisé en ce que
la position de lecture du bras de lecture (13) peut être réglée manuellement de telle façon que la lecture puisse commencer en un endroit voulu quelconque du support de son (50).

4. Phonographe selon la revendication 3,
caractérisé en ce que
le réglage manuel de la position du bras de lecture (13) a lieu par coulissement de la tête de lecture (12) accessible dans la fenêtre (63).

5. Phonographe selon l'une quelconque des revendications 2 à 4,
caractérisé en ce que
une échelle graduée (64) est appliquée sur le côté (61) faisant face au sillon gravé du plateau tournant (60) à proximité de la fenêtre (63).

6. Phonographe selon l'une quelconque des revendications précédentes,
caractérisé en ce que
ses dimensions se montent au plus à 15 x 12 x 6 cm.
